# NEUE EUROPÄISCHE PATENTSCHRIFT

(11) **EP 3 097 372 B2**
(45) Veröffentlichungstag und Bekanntmachung des Hinweises auf die Entscheidung über den Einspruch: **04.09.2024**
(45) Hinweis auf die Patenterteilung: 24.03.2021
(21) Anmeldenummer: 14780471.0
(22) Anmeldetag: 01.10.2014
(51) Int. Cl.: F25D 17/04, F25D 29/00, A23B 4/06, F25D 17/06

(54) **KÄLTEGERÄT MIT UNTERSTÜTZUNG DES KÜHLGUTREIFEPROZESSES, INSBESONDERE FÜR FLEISCH**
REFRIGERATION APPLIANCE WITH ENHANCEMENT OF THE AGING PROCESS OF THE REFRIGERATED GOODS, IN PARTICULAR MEAT
APPAREIL FRIGORIFIQUE À ENTRETIEN DU PROCESSUS DE MATURATION DES MARCHANDISES RÉFRIGÉRÉES, NOTAMMENT DE LA VIANDE

(30) Priorität: 02.10.2013 DE 102013220089
(43) Veröffentlichungstag der Anmeldung: 30.11.2016
(73) Patentinhaber: Landig + Lava GmbH & Co. KG, 88348 Bad Saulgau (DE)
(72) Erfinder: KLINGSHIRN, Astrid, 86441 Zusmarshausen (DE); SCHESSL, Bernd, 89407 Dillingen (DE)
(74) Vertreter: Herrmann, Uwe
(86) Internationale Anmeldenummer: PCT/EP2014/071069
(87) Internationale Veröffentlichungsnummer: WO 2015/049302

(56) Entgegenhaltungen:
- EP-A1- 1 194 175
- EP-A1- 2 172 725
- EP-A1- 2 447 651
- EP-A2- 1 621 835
- EP-A2- 1 840 490
- CN-U- 201 569 236
- DE-A1- 102012 201 089
- DE-A1- 3 203 903
- DE-C- 638 141
- DE-T2- 3 889 411
- DE-U1- 202007 006 160
- DE-U1- 202007 014 888
- DE-U1- 202008 001 116
- DE-U1- 29 706 778
- FR-A- 1 094 179
- JP-A- 2002 188 882
- JP-A- 2007 006 820
- KR-Y1- 200 450 516
- US-A- 2 419 119
- US-A- 2 494 024
- US-A1- 2002 174 674
- US-A1- 2009 142 458
- US-A1- 2010 154 452
- Geratedokumentation GKPv 6580 /1480 aus 2007
- Prospekt ?Kühlen und Gefrieren ?88/'89
- "Prospekt ?Wein-Spezial - Das perfekte Klima für edle Weine

## Beschreibung

Die vorliegende Erfindung betrifft einen Kühlschrank mit einem Lagerbereich für Kühlgut, insbesondere für Fleisch.

Die Offenlegungsschrift EP 2 172 725 A1 zeigt ein Kältegerät.

Die Offenlegungsschrift FR 1 094 179 A zeigt ein Verfahren zum Abkühlen von frisch geschlachtetem Fleisch.

Die Gebrauchsmusterschrift DE 20 2007 006 160 U1 stellt ein gekühltes Ausstellungsmöbel zur Beladung von der Rückseite vor.

Es ist die der Erfindung zugrundeliegende Aufgabe, einen Kühlschrank anzugeben, bei dem ein Reifeprozess von Fleisch unterstützt wird.

Diese Aufgabe wird durch den Gegenstand mit den Merkmalen nach dem unabhängigen Anspruch gelöst.

Gemäß einem Aspekt der Erfindung wird die Aufgabe durch einen Kühlschrank mit einem Lagerbereich für Kühlgut gelöst, bei dem der Kühlschrank eine Temperatureinstellungseinrichtung zum Einstellen einer Temperatur in dem Lagerbereich zwischen -0,5...4°C und eine Belüftungseinrichtung zum Erzeugen eines Luftstroms mit einer Luftgeschwindigkeit zwischen 0,5 m/s und 2,5m/s in dem Lagerbereich umfasst.

Gemäß der Erfindung liegt die Temperatur in dem Lagerbereich zwischen 0,5°C und 1,5°C. Durch den Kühlschrank wird beispielsweise der technische Vorteil erreicht, dass der Reifeprozess von Fleisch im Lagerbereich unterstützt wird.

Unter einem Kältegerät wird insbesondere ein Haushaltskältegerät verstanden, also ein Kältegerät, das zur Haushaltsführung in Haushalten oder im Gastronomiebereich eingesetzt wird, und insbesondere dazu dient Lebensmittel und/oder Getränke bei bestimmten Temperaturen zu lagern, wie beispielsweise ein Kühlschrank, ein Gefrierschrank, eine Kühlgefrierkombination, eine Gefriertruhe oder ein Weinkühlschrank.

Gemäß der Erfindung ist der Kühlschrank ausgebildet, eine relative Luftfeuchtigkeit zwischen 50% und 85% in dem Lagerbereich einzustellen.

Gemäß der Erfindung ist der Kühlschrank ausgebildet, eine relative Luftfeuchtigkeit zwischen 75% und 85% in dem Lagerbereich einzustellen. Dadurch wird beispielsweise der technische Vorteil erreicht, dass der Reifeprozess von Fleisch im Lagerbereich nochmals verbessert wird.

Ebenfalls gemäß der Erfindung umfasst der Kühlschrank eine Luftfeuchtigkeitseinstellungseinrichtung mit einem Feuchtesensor zum Einstellen einer relativen Luftfeuchtigkeit zwischen 50% und 85% in dem Lagerbereich. Dadurch wird beispielsweise der technische Vorteil erreicht, dass eine aktive Be- und Entfeuchtung des Lagerbereichs bei einer Grenzwertüberschreitung erfolgen kann.

In einer weiteren vorteilhaften Ausführungsform des Kühlschranks ist das Kühlgut in dem Lagerbereich vor ultravioletter Strahlung schützbar. Dadurch wird beispielsweise der technische Vorteil erreicht, dass Umfärbungsreaktionen von Fleisch vermieden werden.

In einer weiteren vorteilhaften Ausführungsform des Kühlschranks umfasst der Kühlschrank einen Filter zur Reinigung der Luft in dem Lagerbereich. Dadurch wird beispielsweise der technische Vorteil erreicht, dass Partikel und Verunreinigungen aus dem Luftstrom entfernt werden.

In einer weiteren vorteilhaften Ausführungsform des Kühlschranks umfasst der Kühlschrank eine Luftentkeimungseinrichtung zum Entkeimen der Luft in dem Lagerbereich. Dadurch wird beispielsweise der technische Vorteil erreicht, dass ein Übertrag vom Keimen auf das Kühlgut durch die Luft vermieden wird.

Gemäß der Erfindung umfasst der Kühlschrank eine Steuereinrichtung zum Steuern der Temperatur, der Luftgeschwindigkeit und der relativen Luftfeuchtigkeit in Abhängigkeit des Kühlgutes im Lagerbereich. Dadurch wird beispielsweise der technische Vorteil erreicht, dass ein speziell auf das Kühlgut angepasstes Kühlprogramm mit individuellen Lagerklimaparametern durchgeführt werden kann.

In einer weiteren vorteilhaften Ausführungsform des Kühlschranks umfasst die Steuereinrichtung eine Eingabeeinrichtung zum manuellen Eingeben von Daten über das Kühlgut. Dadurch wird beispielsweise der technische Vorteil erreicht, dass das Kühlprogramm automatisch auf Basis durchgeführter Angaben eines Benutzers über das Kühlgut ausgewählt werden kann.

In einer weiteren vorteilhaften Ausführungsform des Kühlschranks ist die Steuereinrichtung ausgebildet, die Temperatur, die Luftgeschwindigkeit und die Luftfeuchtigkeit in Abhängigkeit der eingegebenen Daten zu steuern. Dadurch wird beispielsweise der technische Vorteil erreicht, dass die einzelnen Lagerklimaparameter individuell angepasst werden können.

In einer weiteren vorteilhaften Ausführungsform des Kühlschranks umfassen die eingebbaren Daten eine Tierart, ein Teilstückgewicht und eine Teilstückgröße, einen gewünschten Reifegrad und/oder einen gewünschten Verzehrtermin. Dadurch wird beispielsweise der technische Vorteil erreicht, dass das Kühlprogramm besonders genau angepasst werden kann.

In einer weiteren vorteilhaften Ausführungsform des Kühlschranks umfasst der Kühlschrank eine Einstellungseinrichtung zum manuellen Einstellen der Temperatur, der Luftgeschwindigkeit und/oder der relativen Luftfeuchtigkeit in dem Lagerbereich. Dadurch wird beispielsweise der technische Vorteil erreicht, dass ein Benutzer die Lagerklimaparameter selbstständig auswählen kann.

In einer weiteren vorteilhaften Ausführungsform des Kühlschranks umfasst der Lagerbereich eine perforierte Ablagefläche. Dadurch wird beispielsweiseder t echnische Vorteil erreicht, dass Feuchtigkeit vom Kühlgut abtropfen kann.

In einer weiteren vorteilhaften Ausführungsform des Kühlschranks ist die Ablagefläche aus Edelstahl gebildet. Dadurch wird beispielsweise der technische Vorteil erreicht, dass eine leicht zu reinigende und hygienische Ablagefläche verwendet wird.

In einer weiteren vorteilhaften Ausführungsform des Kühlschranks umfasst der Lagerbereich einen Haken zur Fixierung von Fleischstücken. Dadurch wird beispielsweise der technische Vorteil erreicht, dass Fleisch dem Lagerbereich aufgehängt werden kann und das Entstehen von Druckstellen verhindert wird.

Gemäß der Erfindung des Kühlschranks ist der Lagerbereich in einem Kühlfach angeordnet. Dadurch wird beispielsweise der technische Vorteil erreicht, dass sich die Lagerklimaparameter leicht und mit geringem Energieaufwand einstellen und aufrechterhalten lassen.

Ausführungsbeispiele der Erfindung sind in den Zeichnungen dargestellt und werden im Folgenden näher beschrieben.

Es zeigen:
Fig. 1 eine schematische Ansicht eines nicht mehr erfindungsgemäßen Kühlschranks; und
Fig. 2 eine schematische Ansicht eines weiteren Kühlschranks.

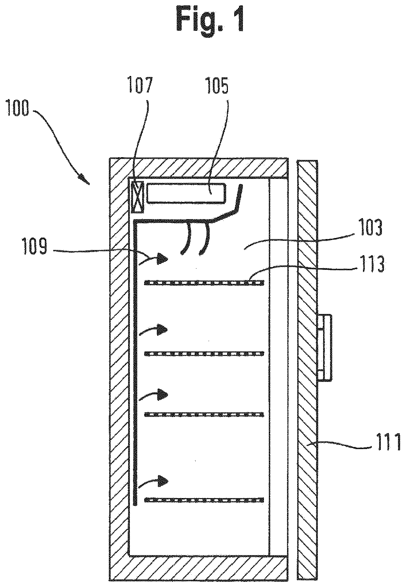

Fig. 1 zeigt einen Kühlschrank stellvertretend für einen Kühlschrank 100 mit einer Kältegerätetür 111. Der Kühlschrank dient beispielsweise zur Kühlung von Lebensmitteln und umfasst einen Kältemittelkreislauf mit einem Verdampfer oder mehreren Verdampfereinheiten, einem Verdichter, einem Verflüssiger und einem Drosselorgan. Der Verdampfer ist ein Wärmeaustauscher, in dem nach der Expansion das flüssige Kältemittel durch Wärmeaufnahme von dem zu kühlenden Medium, d.h. der Luft im Inneren des Kühlschranks, verdampft wird.

Der Verdichter ist ein mechanisch betriebenes Bauteil, das Kältemitteldampf vom Verdampfer absaugt und bei einem höheren Druck zum Verflüssigerausstößt. Der Verflüssiger ist ein Wärmeaustauscher, in dem nach der Kompression das verdampfte Kältemittel durch Wärmeabgabe an ein äußeres Kühlmedium, d.h. die Umgebungsluft, verflüssigt wird. Das Drosselorgan ist eine Vorrichtung zurständigen Verminderung des Druckes durch Querschnittsverengung.

Das Kältemittel ist ein Fluid, das für die Wärmeübertragung in dem kälteerzeugenden System verwendet wird, das bei niedrigen Temperaturen und niedrigem Druck des Fluids Wärme aufnimmt und bei höherer Temperatur und höherem Druck des Fluids Wärme abgibt, wobei üblicherweise Zustandsänderungen des Fluids inbegriffen sind.

In dem Kühlschrank 100 werden Klimabedingungen geschaffen, die die gezielte Nachreifung von Fleisch, insbesondere Rindfleisch, im privaten Haushalt ermöglichen. Fleisch durchläuft nach der Schlachtung einen Reifeprozess, um die Verzehrqualität herzustellen und gezielt zu beeinflussen. Die Reifung von Fleisch läuft in zwei Phasen ab.

In der ersten Phase läuft ein zellinterner Vorgang ab, der unter den üblichen Kühlbedingungen zwischen 0 °C bis 4 °C beim Rind ca. 36 - 40 Stunden und beim Schwein 6 - 8 Stunden dauert. Dabei werden in den Muskeln befindliche Glykogenreserven ohne Sauerstoff abgebaut und Milchsäure gebildet. Der pH-Wert des Fleisches sinkt von 7,2 auf 5,5. Ist das Glykogen verbraucht, vernetzen sich die Muskelfasern und das Fleisch wird hart und zäh.

In der zweiten Phase führen proteolytisch bedingte morphologische Veränderungen zu einer Änderung der Myofibrillen und damit zu der gewünschten zarten Konsistenz. Während der Reifung kommt es zu einem leichten Anstieg des pH-Wertes. Das Wasserverbindungsvermögen nimmt zu, so dass es bei der Fleischzubereitung zu geringerem Saftaustritt kommt. Die Reifungsphase dauert bei Temperaturen um 3°C bei Rindfleisch ca. 14 Tage, bei Kalbfleisch 7 Tage und bei Schweinefleisch ca. 60 Stunden.

Als Dry Aging oder Trockenreifung wird ein Abhängen von Fleisch am Knochen, in Hälften oder Teilstücken bezeichnet. Dry Aging ist ein langsamer Reifeprozess mit einem hohen Wasserverlust von bis zu 30% und einer Reifedauer von bis zu 4 Wochen. Als Wet Aging oder Nassreifung wird eine Reifung von Fleisch unter Ausschluss von Luft im Vakuumbeutel bezeichnet. Eine anaerobe Fleischreifung findet durch fleischeigene Milchsäurebakterien statt. Diese ist durch eine Pergament-Reifung ergänzbar, bei der Fleisch vor dem Vakuumieren in Pergament gewickelt wird, so dass austretender Fleischsaft nicht dauerhaft mit dem Fleisch in Berührung steht. In Dry Bags oder Reifebeuteln findet eine Reifung in halbdurchlässigen Membranbeuteln statt. Dabei gelangt Sauerstoff an das Fleisch, Tropfsaft kann abgeleitet werden und ein Gewichtsverlust wird reduziert. Beim Aqua Aging wird eine Fleischreifung in Mineralwasser mit hohem Calcium-, Magnesium- und Hydrogencarbonat-Gehalt durchgeführt. Daneben kann eine Reifung in Rindertalg vorgenommen werden.

Der Kühlschrank 100 ermöglicht eine Fleischreifung sowie die Nachreifung von Fleischteilstücken nach der Dry Aging- oder Wet-Aging-Methode oder in einem Reifebeutel im privaten Haushalt. Die Reifung oder Nachreifung des Fleisches kann dabei entweder im gesamten Kühlfach als Lagerbereich 103 oder in separaten Lagerbereichen 103 erfolgen.

Ein separater Lagerbereich 103 für Fleisch als Kühlgut verfügt beispielsweise über eine zusätzliche Temperaturkontrolle mittels einer Temperatureinstellungseinrichtung 105 oder einem gesteuerten Verdampfer 105 mit einem Temperatursensor zum Einstellen einer Temperatur in dem Lagerbereich 103. Daneben umfasst der Lagerbereich 103 eine Feuchtekontrolle mittels einer Luftfeuchtigkeitseinstellungseinrichtung zum Einstellen einer relativen Luftfeuchtigkeit. Eine Belüftungseinrichtung 107, wie beispielsweise ein Lüfterrad, dient zum Erzeugen eines Luftstroms 109 mit einer vorgegebenen Luftgeschwindigkeit in dem Lagerbereich 103.

In dem Lagerbereich ist eine perforierte Ablagefläche 113 angeordnet, die beispielsweise aus Edelstahl gebildet ist. Daneben kann der Lagerbereich 103 einen oder mehrere Haken zur Fixierung von Fleischstücken umfassen.

Um den Reife- oder Nachreifeprozess zu unterstützen, werden gemäß der Erfindung folgende Lagerklimaparameter im Lagerbereich 103 aufrecht erhalten: Ein Zieltemperaturbereich für die Nachreifung liegt zwischen 0,5 °C - 1,5°C. Ein Zielbereich für die relative Luftfeuchtigkeit liegt zwischen 75% bis 85%. Die Steuerung der Luftfeuchtigkeit erfolgt durch Verwendung einer Luftfeuchtigkeitseinstellungseinrichtung mit einem Feuchtesensor im Lagerbereich zur Be- oder Entfeuchtung bei einer vorgegebenen Grenzwertüberschreitung. Der Zielbereich für eine Luftgeschwindigkeit in Lagerbereich 103 liegt zwischen 0,5 m/s und 2,5m/s zum schnellen Abtrocknen und zur Vermeidung von Schimmelbildung auf dem Fleisch. Ein Ausschluss von ultraviolettem Licht (UV-Licht) während der Produktreifung vermeidet Umfärbungsreaktionen. Um Geruchsübertragungen und Keimübertragungen während des Reifeprozesses zu vermeiden, kann eine Luftreinigung erfolgen, beispielsweise durch eine UV-Entkeimung oder durch einen Mikrofilter. Dadurch wird die Luftqualität im Lagerbereich verbessert.

Für eine Regelung, Steuerung oder Programmauswahl der Reifefunktion kann ein Benutzer die Zieltemperatur im Lagerbereich direkt über eine Geräteelektronik oder eine separate Elektronik am Lagerfach einstellen. Eine Auswahl eines Reifeprogramms kann über eine separate oder ergänzte Geräteelektronik erfolgen, bei der die Lagerklimaparameter beispielsweise nach einer Tierart, einem Teilstückgewicht und -große, einem gewünschtem Reifegrad oder einem gewünschtem Verzehrtermin angepasst werden.

Lagersysteme zur Sicherstellung einer ausreichenden und homogenen Belüftung der nachzureifenden Ware können durch eine perforierte Ablagefläche 113 aus beispielsweise Edelstahl gebildet werden. Daneben können fest fixierte oder flexibel montierbare Haken zur Fixierung von größeren Teilstücken im Lagerberiech vorgesehen sein.

Der Kühlschrank 100 kann von der reinen Produktlagerung mit dem Anspruch des Qualitätserhalts bis hin zur Produktveredelung und damit weiteren Qualitätsverbesserung von Kühlgut verwendet werden. Das in dem Kühlschrank 100 gereiftes Fleisch hat eine größere Wasserbindungsfähigkeit, gart schneller und bleibt saftig und entwickelt ein ausgeprägteres Aroma. Der Kühlschrank 100 ermöglicht eine individualisierte Fleischreifung und Professionalisierung von Haushaltskühlgeräten, beispielsweise durch Adressierung von Gourmets. Die Verzehrqualität nimmt während der Nachreifezeit im Lagerbereich 103 zu und ein individueller Verzehrzeitpunkt kann frei gewählt werden. Dadurch entsteht eine Flexibilisierung durch eine weitere Entkoppelung von Einkauf und Verzehr.

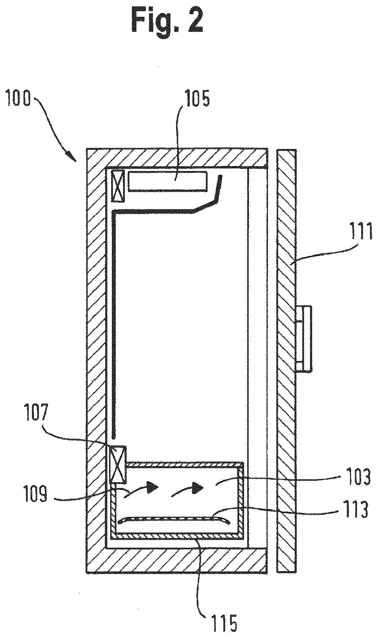

Fig. 2 zeigt eine schematische Ansicht eines weiteren Kühlschranks 100. In diesem Kühlschrank 100 ist die perforierte Ablagefläche 113 als Lagerbereich 103 innerhalb eines Kühlfaches 115 angeordnet. Das Kühlfach 115 umfasst eine separate Belüftungseinrichtung 107, die einen Luftstrom 109 mit einer Luftgeschwindigkeit in Lagerbereich 103 zwischen 0,5 m/s und 2,5m/s erzeugt. Die Umsetzung des Reifeprozesses erfolgt in einem dynamisch gekühlten Kühlfach 115 mit Lamellenverdampfer.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Kältegerät
- 103: Lagerbereich
- 105: Temperatureinstellungseinrichtung/Verdampfer
- 107: Belüftungseinrichtung
- 109: Luftstrom
- 111: Kältegerätetür
- 113: Ablagefläche
- 115: Kühlfach

## Patentansprüche

1. Kühlschrank (100) zur Unterstützung eines Reifeprozesses von Fleisch, mit einem Lagerbereich (103) für Kühlgut, wobei der Kühlschrank (100) eine Temperatureinstellungseinrichtung (105) zum Einstellen einer Temperatur in dem Lagerbereich (103) zwischen -0,5°C und 4°C, eine Luftfeuchtigkeitseinstellungseinrichtung mit einem Feuchtesensor zum Einstellen einer relativen Luftfeuchtigkeit zwischen 50% und 85% in dem Lagerbereich (103), und eine Belüftungseinrichtung (107) zum Erzeugen eines Luftstroms (109) mit einer Luftgeschwindigkeit zwischen 0,5 m/s und 2,5 m/s in dem Lagerbereich (103) umfasst, wobei der Kühlschrank (100) eine Steuereinrichtung aufweist zum Steuern der Temperatur, der Luftgeschwindigkeit und der relativen Luftfeuchtigkeit in Abhängigkeit des Kühlgutes, **dadurch gekennzeichnet, dass** im Lagerbereich für einen Reife- oder Nachreifeprozess die Lagerklimaparameter aufrecht erhalten werden:
- ein Zieltemperaturbereich zwischen 0,5 °C-1,5°C,
- ein Zielbereich für die relative Luftfeuchtigkeit zwischen 75% bis 85%, und
- ein Zielbereich für eine Luftgeschwindigkeit zwischen 0,5 m/s und 2,5 m/s, wobei der Lagerbereich (103) in einem Kühlfach (115) angeordnet ist, wobei die Belüftungseinrichtung als eine separate Belüftungseinrichtung (107) des Kühlfachs (115) ausgebildet ist, wobei das Kühlfach (115) als ein dynamisch gekühltes Kühlfach (115) mit Lamellenverdampfer ausgebildet ist, in dem die Umsetzung des Reifeprozesses erfolgt.

2. Kühlschrank (100) nach Anspruch 1, **dadurch gekennzeichnet, dass** das Kühlgut in dem Lagerbereich (103) vor ultravioletter Strahlung schützbar ist.

3. Kühlschrank (100) nach einem der vorangehenden Ansprüche, **dadurch gekennzeichnet, dass** der Kühlschrank (100) einen Filter zur Reinigung der Luft in dem Lagerbereich (103) umfasst.

4. Kühlschrank (100) nach einem der vorangehenden Ansprüche, **dadurch gekennzeichnet, dass** der Kühlschrank (100) eine Luftentkeimungseinrichtung zum Entkeimen der Luft in dem Lagerbereich umfasst.

5. Kühlschrank (100) nach einem der vorangehenden Ansprüche, **dadurch gekennzeichnet, dass** die Steuereinrichtung eine Eingabeeinrichtung zum manuellen Eingeben von Daten über das Kühlgut umfasst.

6. Kühlschrank (100) nach Anspruch 5, **dadurch gekennzeichnet, dass** die Steuereinrichtung ausgebildet ist, die Temperatur, die Luftgeschwindigkeit und die Luftfeuchtigkeit in Abhängigkeit der eingegebenen Daten zu steuern.

7. Kühlschrank (100) nach Anspruch 5 oder 6, **dadurch gekennzeichnet, dass** die eingebbaren Daten eine Tierart, ein Teilstückgewicht und eine Teilstückgröße, einen gewünschten Reifegrad und/oder einen gewünschtem Verzehrtermin umfassen.

8. Kühlschrank (100) nach einem der vorangehenden Ansprüche, **dadurch gekennzeichnet, dass** der Kühlschrank (100) eine Einstellungseinrichtung zum manuellen Einstellen der Temperatur, der Luftgeschwindigkeit und/oder der relativen Luftfeuchtigkeit in dem Lagerbereich (103) umfasst.

9. Kühlschrank (100) nach einem der vorangehenden Ansprüche, **dadurch gekennzeichnet, dass** der Lagerbereich (103) eine perforierte Ablagefläche (113) umfasst.

10. Kühlschrank (100) nach einem der vorangehenden Ansprüche, **dadurch gekennzeichnet, dass** die Ablagefläche (113) aus Edelstahl gebildet ist.

11. Kühlschrank (100) nach einem der vorangehenden Ansprüche, **dadurch gekennzeichnet, dass** der Lagerbereich (103) einen Haken zur Fixierung von Fleischstücken umfasst.

## Claims

1. Refrigerator (100) for enhancing an ageing process of meat, having a storage area (103) for refrigerated goods, wherein the refrigerator (100) comprises a temperature setting device (105) for setting a temperature in the storage area (103) between -0.5 °C and 4 °C, an humidity setting device with a humidity sensor for setting a humidity between 50 % and 85 % in the storage area (103), and a ventilation device (107) for generating an air flow (109) with an air speed between 0.5 m/s and 2.5 m/s in the storage area (103), wherein the refrigerator (100) comprises a control device for controlling the temperature, the air speed and the humidity as a function of the refrigerated goods, **characterised in that** the storage climate parameters are maintained in the storage area for an ageing or post-ageing process:
- a target temperature between 0.5 °C - 1.5 °C,
- a target area for the humidity between 75 % to 85 %, and a target area for an air speed between 0.5 m/s and 2.5 m/s, wherein the storage area (103) is arranged within a refrigeration compartment (115), wherein the ventilation device is configured as a separate ventilation device (107) of the refrigeration compartment (115), wherein the refrigeration compartment (115) is configured as a dynamically cooled refrigeration compartment (115) with a fin evaporator, in which the implementation of the ageing process is effected.

2. Refrigerator (100) according to claim 1, **characterised in that** the refrigerated goods can be protected from ultraviolet radiation in the storage area (103).

3. Refrigerator (100) according to any one of the preceding claims, **characterised in that** the refrigerator (100) comprises a filter for cleaning the air in the storage area (103).

4. Refrigerator (100) according to any one of the preceding claims, **characterised in that** the refrigerator (100) comprises an air disinfection device for disinfecting the air in the storage area.

5. Refrigerator (100) according to any one of the preceding claims, **characterised in that** the control device comprises an input device for manually inputting data relating to the refrigerated goods.

6. Refrigerator (100) according to claim 5, **characterised in that** the control device is configured to control the temperature, the air speed and the humidity as a function of the input data.

7. Refrigerator (100) according to claim 5 or 6, **characterised in that** the inputtable data comprises an animal type, the weight of a portion and the size of a portion, a desired degree of aging and/or a desired consumption date.

8. Refrigerator (100) according to any one of the preceding claims, **characterised in that** the refrigerator (100) comprises a setting device for manually setting the temperature, the air speed and/or the humidity in the storage area (103).

9. Refrigerator (100) according to any one of the preceding claims, **characterised in that** the storage area (103) comprises a perforated shelf surface (113).

10. Refrigerator (100) according to any one of the preceding claims, **characterised in that** the shelf surface (113) is made of stainless steel.

11. Refrigerator (100) according to any one of the preceding claims, **characterised in that** the storage area (103) comprises a hook for securing pieces of meat.

## Revendications

1. Réfrigérateur (100) destiné à favoriser un processus de maturation de la viande, comprenant une zone de stockage (103) pour des produits réfrigérés, dans lequel le réfrigérateur (100) comprend un dispositif de réglage de température (105) destine à régler une température dans la zone de stockage (103) entre -0,5 °C et 4 °C, un dispositif de réglage d'humidité de l'air comprenant un capteur d'humidité de l'air destine à régler une humidité de l'air relative entre 50 % et 85 % dans la zone de stockage (103), et un dispositif d'aération (107) destine à générer un courant d'air (109) avec une vitesse de l'air entre 0,5 m/s et 2,5 m/s dans la zone de stockage (103), dans lequel l'Réfrigérateur (100) présente un dispositif de commande destine à commander la température, la vitesse de l'air et l'humidité relative de l'air en fonction des produits réfrigérées, **caractérisé en ce que** pour un processus de maturation ou de maturation ultérieure, les paramètres climatiques de stockage sont maintenus dans la zone de stockage :
- une plage de température cible entre 0,5 °C - 1,5 °C,
- une plage cible pour l'humidité relative de l'air entre 75 % jusqu'à 85 %, et une plage cible pour une vitesse de l'air entre 0,5 m/s et 2,5 m/s, la zone de stockage (103) étant située dans un compartiment de réfrigération (115), dans lequel le dispositif d'aération est conçu comme un dispositif d'aération séparé (107) du compartiment de réfrigération (115), dans lequel le compartiment de réfrigération (115) est configuré comme un compartiment de réfrigération à refroidissement dynamique (115) avec un évaporateur à ailettes, dans lequel la implémentation du processus du maturation a lieu.

2. Réfrigérateur (100) selon la revendication 1, **caractérisé en ce que** les produits réfrigérés peuvent être protégés contre le rayonnement ultraviolet dans la zone de stockage (103).

3. Réfrigérateur (100) selon l'une quelconque des revendications précédentes, **caractérisé en ce que** le réfrigérateur (100) comprend un filtre pour purifier l'air dans la zone de stockage (103).

4. Réfrigérateur (100) selon l'une quelconque des revendications précédentes, **caractérisé en ce que** le réfrigérateur (100) comprend un dispositif de désinfection de l'air destine à désinfecter l'air dans la zone de stockage.

5. Réfrigérateur (100) selon l'une quelconque des revendications précédentes, **caractérisé en ce que** le dispositif de commande comprend un dispositif d'entrée pour l'entrée manuelle de données concernant les produits réfrigères.

6. Réfrigérateur (100) selon la revendication 5, **caractérisé en ce que** le dispositif de commande est réalisé pour commander la température, la vitesse de l'air et l'humidité de l'air en fonction des données entrées.

7. Réfrigérateur (100) selon la revendication 5 ou 6, **caractérisé en ce que** les données pouvant être entrées comprennent une espèce animale, un poids d'une pièce et une taille d'une pièce, un degré de maturation souhaite et/ou une date de consommation souhaitée.

8. Réfrigérateur (100) selon l'une quelconque des revendications précédentes, **caractérisé en ce que** le réfrigérateur (100) comprend un dispositif de réglage pour le réglage manuel de la température, de la vitesse de l'air et/ou de l'humidité relative de l'air dans la zone de stockage (103).

9. Réfrigérateur (100) selon l'une quelconque des revendications précédentes, **caractérisé en ce que** la zone de stockage (103) comprend une surface de pose (113) perforée.

10. Réfrigérateur (100) selon l'une quelconque des revendications précédentes, **caractérisé en ce que** la surface de pose (113) est formée d'acier inoxydable.

11. Réfrigérateur (100) selon l'une quelconque des revendications précédentes, **caractérisé en ce que** la zone de stockage (103) comprend un crochet pour la fixation de morceaux de viande.
